# EUROPÄISCHE PATENTSCHRIFT

(11) **EP 0 758 362 B1**
(45) Veröffentlichungstag und Bekanntmachung des Hinweises auf die Patenterteilung: **29.12.1997**
(21) Anmeldenummer: 95918608.1
(22) Anmeldetag: 26.04.1995
(51) Int. Cl.: C09D 5/36

(54) **ÜBERZUGSMITTEL MIT VOM BETRACHTUNGSWINKEL ABHÄNGIGEM FARBEINDRUCK UND DEREN EINSATZ IN BASISLACKEN FÜR MEHRSCHICHTLACKIERUNGEN**
COATING COMPOSITIONS WHOSE PERCEIVED COLOUR DEPENDS ON THE ANGLE FROM WHICH THEY ARE VIEWED AND THE USE OF SUCH COMPOSITIONS IN BASE PAINTS FOR MULTIPLE LAYER PAINT COATINGS
COMPOSITIONS DE REVETEMENT DONT LA COULEUR PERCUE DEPEND DE L'ANGLE D'OBSERVATION, ET UTILISATION DES TELLES COMPOSITIONS DANS DES PEINTURES DE BASE POUR REVETEMENTS

(30) Priorität: 30.04.1994 DE 4415228
(43) Veröffentlichungstag der Anmeldung: 19.02.1997
(73) Patentinhaber: WACKER-CHEMIE GMBH, D-81737 München (DE)
(72) Erfinder: DÖBERT, Jürgen, D-45549 Sprockhövel (DE); OPPERMANN, Manfred, D-42389 Wuppertal (DE); PRESCHER, Michael, D-42111 Wuppertal (DE); RICHTER, Günter, D-42327 Wuppertal (DE)
(74) Vertreter: Potten, Holger
(86) Internationale Anmeldenummer: EP9501568
(87) Internationale Veröffentlichungsnummer: WO9529961

(56) Entgegenhaltungen:
- EP-A- 0 357 844
- EP-A- 0 358 208
- WO-A-91/13125

## Beschreibung

Die Erfindung betrifft Überzugsmittel, die geeignet sind Überzüge mit besonders brillantem, betrachtungswinkelabhängigem Farbeindruck zu erzeugen. Insbesondere handelt es sich bei diesen Überzugsmitteln um Basislacke.

Überzugsmittel, die die Herstellung von Überzügen mit lichteinfallswinkelabhängigem und/oder betrachtungswinkelabhängigem Farbeindruck erlauben, sind insbesondere als Effektbasislacke bekannt. Bei den Effektbasislacken besteht die Forderung nach einer ständig wachsenden Anzahl von Effektfarbtönen. Die Effektbasislacke enthalten plättchenförmige Effektpigmente, die einen sogenannten Helligkeits- und/oder Farbflop bewirken. Ausgehend von reinen Metallschuppenpigmenten zur Erzeugung eines Helligkeitsflops, z.B. aus Aluminium, ist eine Vielzahl weiterer plättchenförmiger Effektpigmente entwickelt worden, die für den Einsatz in Effektbasislacken geeignet sind. Beispiele für weitere plättchenförmige Effektpigmente sind Interferenzpigmente, wie z.B. metalloxidbeschichtete Metallpigmente, z.B. titandioxidbeschichtetes oder mischoxidbeschichtetes Aluminium, beschichtete Glimmer, wie z.B. titandioxidbeschichtete Glimmer, Graphiteffektpigmente. Es ist üblich, derartige Effektpigmente auch miteinander zu kombinieren, beispielsweise werden Aluminiumplättchenpigmente mit Interferenzpigmenten auf Glimmerbasis in Effektbasislacken für die Fahrzeuglackierung kombiniert. Mit den bekannten Interferenzpigmenten kann ein nur relativ schwach ausgeprägter Farbflop erzielt werden.

In der älteren EP-A- 0 601 483 werden Pigmente mit vom Betrachtungswinkel abhängiger Farbigkeit beschrieben, die aus orientierten dreidimensional vernetzten Substanzen mit flüssigkristalliner Struktur mit chiraler Phase bestehen.

In der EP-A-0 357 844 werden wasserverdünnbare Überzugsmittel beschrieben, die eine Kombination von Flop-Effektpigmenten und eingekapselten thermochromen Flüssigkristallpigmenten enthalten. Damit hergestellte Überzüge wechseln ihren Farbeindruck reversibel in Abhängigkeit von der Temperatur.

Aufgabe der Erfindung ist die Bereitstellung von Überzugsmitteln, insbesondere von Basislacken, die die Herstellung von Überzügen mit neuartigen Farbeffekten erlauben, wobei deren Farbeindruck unabhängig von der Temperatur sein soll.

Es hat sich gezeigt, daß diese Aufgabe gelöst werden kann durch ein Überzugsmittel, das als Basislack für Mehrschichtlackierungen geeignet ist, und enthält:
- ein oder mehrere lackübliche Bindemittel,
- ein oder mehrere plättchenförmige Pigmente mit vom Betrachtungswinkel abhängiger Farbigkeit, die aus orientierten, dreidimensional vernetzten Substanzen flüssigkristalliner Struktur mit chiraler Phase bestehen,
- ein oder mehrere davon unterschiedliche übliche Effektpigmente,
- gegebenenfalls ein oder mehrere Vernetzer,
- gegebenenfalls ein oder mehrere farbige Absorptionspigmente und/oder Füllstoffe, sowie
- gegebenenfalls lackübliche Additive.

Die Pigmente mit vom Betrachtungswinkel abhängiger Farbigkeit, die aus orientierten dreidimensional vernetzten Substanzen flüssigkristalliner Struktur mit chiraler Phase bestehen, werden in der Folge als LCP-Pigmente (LCP = liquid crystal polymer) bezeichnet. Die LCP-Pigmente können erhalten werden, indem ein oder mehrere dreidimensional vernetzbare flüssigkristalline Substanzen mit chiraler Phase orientiert werden, danach dreidimensional vernetzt werden und anschließend auf die erwünschte Korngröße zerkleinert werden. Dies kann beispielsweise so geschehen, daß die dreidimensional vernetzbaren flüssigkristallinen Substanzen mit chiraler Phase nach dem Aufbringen auf eine Unterlage in dünner Schicht, beispielsweise durch Aufrakeln, auf dieser Unterlage vernetzt, danach von der Unterlage abgelöst und auf die gewünschte Kornfeinheit zerkleinert werden. Dabei entstehen plättchenförmige Pigmente, die an sich farblos und transparent sind. Durch geeignete chemische Strukturbildungsmaßnahmen bezüglich des molekularen Aufbaus können LCP-Pigmente mit unterschiedlichen wirksamen Interferenzfarben hergestellt werden. Die plättchenförmigen LCP-Pigmente haben bevorzugt einen Durchmesser von 1 bis 100 µm, besonders bevorzugt von 10 bis 60 µm und eine Dicke von 3 bis 15 µm, besonders bevorzugt 5 bis 10 µm.

Erfindungsgemäß können beispielsweise solche LCP-Pigmente verwendet werden, wie sie in der EP-A- 0 601 483 beschrieben werden, auf die hier Bezug genommen wird. Auch auf die dort beschriebenen Ausgangssubstanzen zur Herstellung der LCP-Pigmente sowie Details zu deren Herstellungsverfahren wird hier Bezug genommen.

Nach der EP-A- 0 601 483 besitzen flüssigkristalline Substanzen, die als Ausgangssubstanzen für die Herstellung der LCP-Pigmente geeignet sind, eine verdrillte Struktur mit einer Ganghöhe, die einer Wellenlänge des Lichtes im Bereich von UV bis IR entspricht. Diese Struktur findet sich beispielsweise bei cholesterischen Flüssigkristallen. Cholesterische Flüssigkristalle, oder allgemein flüssigkristalline Substanzen mit chiraler Phase, die eine verdrillte Struktur mit einer gewünschten Ganghöhe besitzen, können aus nematischen, smektischen oder diskotischen Strukturen erhalten werden, indem man ihnen eine chirale Substanz zusetzt. Art und Anteil der chiralen Substanz bestimmen die Ganghöhe der verdrillten Struktur und damit die Wellenlänge des reflektierten Lichtes. Die Verdrillung der Struktur kann sowohl links- als auch rechtshändig sein. Die Ausgangssubstanzen müssen zudem polymerisierbare, polykondensierbare oder einer Polyaddition zugängliche Gruppen, von denen zumindest ein Teil in Form di-, tri- oder höherfunktioneller Bausteine vorliegt, enthalten. Beispiele für solche Gruppen sind Methacryloxy- und Acryloxygruppen.

Geeignete Materialien und ihre Herstellung sind beispielsweise in DE-C2-3 604 757, in EP-A2-358 208, in EP-A-0 066 137 (entspricht US-A-4 388 453) oder in der in D.J. Broer et al in 14. Int. Liquid Conf., Abstracts II, 921 (1992) genannten Literatur beschrieben.

Bevorzugt geeignet sind dreidimensional vernetzbare Polyorganosiloxane nach EP-A-0 358 208.

Als Ausgangsstoffe zur Herstellung der LCP-Pigmente können jedoch grundsätzlich alle cholesterischen Flüssigkristalle dienen. Es kann eine Art von cholesterischem Flüssigkristall, es kann aber auch ein Gemisch aus mindestens zwei dieser Flüssigkristalle eingesetzt werden. Zusätzlich zu diesen Flüssigkristallen können als weitere Komponenten andere Farbstoffe und/oder Pigmente bei der Herstellung der LCP-Pigmente eingesetzt werden. Es kann ein Farbstoff, es können auch Gemische aus mindestens zwei Farbstoffen eingesetzt werden.

Der einzusetzende Farbstoff ist in einer bevorzugten Ausführungsform ein Pigment, z.B. Gasruß. Der einzusetzende Farbstoff ist in einer weiteren bevorzugten Ausführungsform im eingesetzten Flüssigkristall(gemisch) löslich. Vorzugsweise wird kein Gemisch von mehreren cholesterischen flüssigkristallinen Substanzen, sondern eine einzelne reine cholesterische flüssigkristalline Substanz eingesetzt.

Das Zumischen der Pigmente und/oder Farbstoffe zu den übrigen Ausgangssubstanzen erfolgt in üblicher Art und Weise, beispielsweise durch Einrühren. Das Zumischen der Farbstoffe und/oder Pigmente bewirkt im LCP-Pigment eine Kombination der winkelabhängigen Farbeffekte der flüssigkristallinen Substanzen mit dem oder den bekannten Farbeffekten der jeweiligen zugemischten Stoffe. Das Zumischen dieser Stoffe ändert jedoch nichts an den weiteren Verfahrensschritten zur Herstellung der LCP-Pigmente.

Eine jeweils gewünschte LCP-Pigmentfarbe kann auch dadurch erhalten werden, daß definierte Flüssigkristall-Grundmischungen in geeigneten Mengenverhältnissen gemischt werden. Auch in diesem Falle ändern sich die weiteren Verfahrensschritte zur Herstellung der LCP-Pigmente nicht. Die weitere Beschreibung des Herstellungsverfahrens gilt daher für alle Varianten der LCP-Pigmente.

Flüssigkristalle mit verdrillten Phasen bilden ihre optischen Eigenschaften erst dann aus, wenn die einzelnen Molekülen in Schichten angeordnet sind und innerhalb einer Schicht einheitlich geordnet sind. Die Moleküle ändern dabei von Schicht zu Schicht ihre Vorzugsrichtung, so daß schraubenförmige Strukturen entstehen. Um dies zu erreichen, werden die Moleküle mittels bekannter Methoden wie beispielsweise durch Orientierungsschichten oder elektrische oder magnetische Felder orientiert. Solche Methoden sind beispielsweise aus den folgenden Literaturstellen bekannt: CA113 (22), 201523y; CA113 (14), 124523u; CA112 (18), 169216s; CA112 (16), 149138q; CA112 (4), 21552c; CA111 (16), 144258y; CA111 (4), 24780r.

Bei der Herstellung der LCP-Pigmente werden die als Beispiele genannten Ausgangssubstanzen in bekannter Weise orientiert. Dies kann beispielsweise durch Aufrakeln auf eine Metall-, Kunststoff- oder Glasunterlage geschehen. Das Aufrakeln flüssigkristalliner Polyorganosiloxane auf eine Folie ist beispielsweise aus der EP-A-0 358 208 bekannt.

Die Vernetzung der orientierten flüssigkristallinen Substanzen erfolgt, wie für das jeweilige Material aus dem Stand der Technik bekannt. So können beispielsweise flüssigkristalline Polyorganosiloxane nach dem in der EP-A-0 066 137 beschriebenen Verfahren thermisch vernetzt werden.

Die in der EP-A-0 358 208 beschriebenen flüssigkristallinen Polyorganosiloxane lassen sich photochemisch beispielsweise durch Bestrahlen mit UV-Licht dreidimensional vernetzen. Einen Überblick über Verfahren, orientierte Ausgangsstoffe photochemisch zu vernetzen, findet sich bei C.G. Roffey, Photopolymerisation of Surface Coatings, (1982) John Willey & Sons, Chichester, S. 137 - 208.

Beispiele für zusätzlich zu den LCP-Pigmenten im erfindungsgemäßen Überzugsmittel verwendbare, im allgemeinen plättchenförmige Effektpigmente sind die üblichen, beispielsweise in Effektlacken verwendeten Pigmente, wie Metallpigmente, z.B. aus Titan, Aluminium oder Kupfer, Interferenzpigmente, wie z.B. metalloxidbeschichtete Metallpigmente, z.B. titandioxidbeschichtetes oder mischoxidbeschichtetes Aluminium, beschichteter Glimmer, z.B. titandioxidbeschichteter oder mischoxidbeschichteter Glimmer, Mikrotitandioxid und Graphiteffektpigmente, plättchenförmiges Eisenoxid (micaceous iron oxide), Molybdändisulfidpigmente, plättchenförmige Kupferphthalocyaninpigmente und Bismutoxidchloridplättchen, beschichtete Glasflakes. Die mischoxidbeschichteten Aluminium- und Glimmerpigmente können mit organischen Pigmenten belegt sein.

Der besondere Farbeindruck bzw. -effekt der aus den erfindungsgemäßen Überzugsmitteln hergestellten Überzüge ergibt sich durch parallele Ausrichtung der plättchenförmigen LCP-Pigmente und der weiteren Effektpigmente in der Überzugsschicht. Aufgrund der regelmäßigen Struktur der LCP-Pigmente und der gleichmäßigen molekularen Anordnung innerhalb der flüssigkristallinen Einheiten kommt es zu starken Interferenzerscheinungen mit dem einfallenden Licht. Sich überlagernd mit den üblichen coloristischen Eigenschaften des weiteren Effektgebers wechselt der Farbeindruck nicht nur abhängig vom Einfallswinkel des Lichtes, sondern zusätzlich vom Betrachtungswinkel. Dies resultiert beispielsweise bei der Betrachtung eines derartig lackierten dreidimensionalen Gegenstandes in einem über das ganze Objekt sich ändernden Farbeindruck.

Das erfindungsgemäße Überzugsmittel kann physikalisch trocknend sein oder unter Ausbildung kovalenter Bindungen vernetzbar sein. Bei den unter Ausbildung kovalenter Bindungen vernetzenden Überzugsmitteln kann es sich um selbst- oder fremdvernetzende Systeme handeln. Es können ein- oder zweikomponentige Systeme sein. Es kann sich um wäßrige Überzugsmittel oder um solche auf Lösemittelbasis handeln.

In den erfindungsgemäßen wäßrigen Überzugsmitteln sind wasserverdünnbare Bindemittel enthalten. Diese enthalten zur Gewährleistung ihrer Wasserverdünnbarkeit Hydrophilie verleihende nicht-ionische und/oder ionische Gruppen.

Beispiele für geeignete nicht-ionisch stabilisierte Bindemittel sind solche Bindemittel, deren Wasserverdünnbarkeit durch Einbau von Polyethersegmenten in das Harzmolekül erreicht wird. Beispiele für derartig stabilisierte Polyurethan- bzw. Polyurethanacrylatharze sind in der EP-A-0 354 261, EP-A-0 422 357 und EP-A-0 424 705 beschrieben.

Bei den wasserverdünnbaren ionische Gruppen tragenden Bindemitteln kann es sich um kationische oder um anionische Gruppen tragende Bindemittel handeln.

Beispiele für geeignete kationisch stabilisierte Bindemittel sind in der DE-A-40 11 633 beschrieben. Es handelt sich um vollständig oder teilweise neutralisierte kationische (Meth)acrylcopolymere-, Polyester, Polyurethan- und/oder Polyurethanharnstoffharze, insbesondere mit einem Zahlenmittel der Molmasse (Mn) von 500 bis 500000, einer OH-Zahl von 0 bis 450, einer Aminzahl von 20 bis 200 und einer Glasübergangstemperatur von -50 bis +150°C.

Bevorzugt sind Bindemittel, die über anionische Gruppen stabilisiert sind. Es handelt sich dabei um ein oder mehrere filmbildende Harze, wie sie in wäßrigen Überzugsmitteln, insbesondere in wäßrigen Basislacken, üblich sind. Die filmbildenden Harze können beispielsweise Polyester-, (Meth)acrylcopolymer- oder bevorzugt Polyurethanbasis haben. Sie können selbst- oder fremdvernetzend oder physikalisch trocknend sein. Beispiele für geeignete wasserverdünnbare (Meth)acrylcopolymere sind in der EP-A-0 399 427 und EP-A-0 287 144 beschrieben.

Beispiele für geeignete wasserverdünnbare Polyesterharze sind in der DE-A-29 26 854, DE-A-38 32 142 und der EP-A-0 301 300 beschrieben.

Es ist auch möglich Gemische von Bindemitteln einzusetzen. Besonders geeignete Bindemittel sind solche, in denen (Meth)acrylcopolymer und Polykondensationsharz kovalent oder in Form interpenetrierender Harzmoleküle verbunden vorliegen. Beispiele für eine verwendbare derartige Kombination von (Meth)acrylcopolymer und Polyesterharz sind in der EP-A-0 226 171 beschrieben.

Beispiele für die besonders bevorzugten anionisch stabilisierten Polyurethanharze sind in der Literatur in groBer Vielfalt beschrieben. Es handelt sich dabei um wäßrige Polyurethandispersionen oder -lösungen oder um solche Bindemittel, in denen (Meth)acrylcopolymer und Polyurethanharz kovalent oder in Form interpenetrierender Harzmoleküle verbunden vorliegen. Geeignete Polyurethandispersionen sind stabile, wäßrige Dispersionen mit einem Festkörper von 20 bis 50 Gew.-%. Das Gewichtsmittel der Molmasse (Mw) der Harze kann in weiten Grenzen schwanken, z.B. von 1000 bis 500000.

Weitere Beispiele für verwendbare Polyurethandispersionen sind solche, die durch Kettenverlängerung isocyanatfunktioneller Prepolymerer mit Polyamin und/oder Polyol hergestellt werden können. Sie werden beispielsweise in den EP-A-0 089 497, EP-A-0 228 003, DE-A-36 28 124 und EP-A-0 512 524 beschrieben.

Weitere Beispiele sind Polyurethandispersionen, die durch Kettenverlängerung isocyanatfunktioneller Prepolymerer mit Wasser hergestellt werden können, wie z.B. in der DE-A-39 15 459 und der DE-A-42 24 617 dargestellt.

Es können auch Polyurethandispersionen verwendet werden, die durch Kettenverlängerung von gegenüber Polyisocyanaten reaktiven, aktiven Wasserstoff enthaltenden Polyurethanprepolymeren mit Polyisocyanaten hergestellt werden, wie z.B. in DE-A-39 03 804 und DE-A-40 01 841 beschrieben.

Weitere Beispiele für verwendbare anionisch stabilisierte Polyurethan(PU)-Dispersionen sind in der DE-A-42 28 510 beschrieben. Dabei handelt es sich um wäßrige Polyurethanharzdispersionen, die erhältlich sind durch Kettenverlängerung von
- einem oder mehreren Polyurethanharzen, die mindestens eine CH-acide Gruppe im Molekül enthalten, durch Umsetzung in wäßrigem oder nicht-wäßrigem Medium, mit
- mindestens einer Verbindung, die mit mindestens zwei CH-aciden Gruppen reagieren kann und
- gegebenenfalls Überführen eines im nicht-wäßrigen Medium erhaltenen Reaktionsproduktes in die wäßrige Phase.

Beispiele für anionisch stabilisierte polyurethanbasierende Bindemittel, in denen (Meth)acrylcopolymer und Polyurethanharz kovalent oder in Form interpenetrierender Harzmoleküle verbunden vorliegen, sind z.B. in den EP-A-0 353 797, EP-A-0 297 576, DE-A-41 22 265 und DE-A-41 22 266 beschrieben. Es handelt sich um Polymerhybride, die durch Emulsionspolymerisation radikalisch polymerisierbarer Monomerer in Gegenwart von anionisch stabilisierten Polyurethanen, die gegebenenfalls auch ungesättigt funktionalisiert sind, hergestellt werden.

Die erfindungsgemäßen Überzugsmittel können ein wäßriges Bindemittel enthalten, es können aber auch mehrere wäßrige Bindemittel in Kombination vorliegen. Bevorzugt sind in den erfindungsgemäßen wäßrigen Überzugsmitteln wäßrige Bindemittel auf Basis anionisch stabilisierter Polyurethane enthalten. Es kann zweckmäßig sein, wenn ein Teil, z.B. bis zu 50 Gew.-%, der Polyurethan-Bindemittel durch Harze auf Basis einer Kombination aus (Meth)acrylcopolymer und Polyesterharz ersetzt wird.

Weiterhin können wasserverdünnbare Bindemittel auf Cellulosebasis enthalten sein.

In den erfindungsgemäßen Überzugsmitteln auf Lösemittelbasis sind in organischen Lösemitteln gelöste oder dispergierte Bindemittel enthalten. Als filmbildende Bindemittel können beispielsweise Polyester-, Alkydharz, Polyurethan-, Poly(meth)acrylatharze und/oder Harze auf Celluloseesterbasis, wie z.B. Celluloseacetobutyrat, enthalten sein. Beispiele für derartige Bindemittelsysteme, die in dem erfindungsgemäßen Überzugsmittel eingesetzt werden können, sind beschrieben in der EP-A-0 289 997, WO-A-9 100 895, DE-A-37 15 264, DE-A-39 13 001, DE-A-41 15 948 und DE-A-42 18 106.

Zur Bereitung der erfindungsgemäßer, Überzugsmittel können verschiedene Vernetzer, wie beispielsweise Formaldehyd-Kondensationsharze, wie Phenol-Formaldehydkondensationsharze und Amin-Formaldehydkondensationsharze, sowie freie oder blockierte Polyisocyanate verwendet werden. Die Vernetzer können einzeln und im Gemisch eingesetzt werden. Das Mischungsverhältnis Vernetzer zu Bindemittelharz beträgt bevorzugt 10 : 90 bis 40 : 60, besonders bevorzugt 20 : 80 bis 30 : 70, jeweils bezogen auf das Festkörpergewicht.

Zu als Vernetzer geeigneten Aminharzen zählen beispielsweise alkylierte Kondensate, die durch Umsetzung von Aminotriazinen und Amidotriazinen mit Aldehyden hergestellt werden. Nach bekannten technischen Verfahren werden Amine oder Aminogruppen tragende Verbindungen wie Melamin, Guanamin, Acetoguanamin, Benzoguanamin, Dicyandiamid oder Harnstoff in Gegenwart von Alkoholen, wie Methanol, Ethanol, Propanol, Butanol oder Hexanol mit Aldehyden, insbesonderen Formaldehyd, kondensiert. Beispiele für derartige Harze und ihre Herstellung werden in "Houben-Weyl, Methoden der organischen Chemie" 1963, Seite 357, beschrieben. Diese Produkte sind im Handel erhältlich.

Als Vernetzungsmittel können auch freie oder blockierte Polyisocyanate eingesetzt werden. Bei den Polyisocyanaten handelt es sich um beliebige organische Di- und/oder Polyisocyanate mit aliphatisch, cycloaliphatisch, araliphatisch und/oder weniger bevorzugt aromatisch gebundenen freien Isocyanatgruppen, die bei Raumtemperatur flüssig sind oder durch Zusatz organischer Lösemittel verflüssigt sind oder in gelöster Form bei 23°C im allgemeinen eine Viskosität von 0,5 bis 2000 mPas, vorzugsweise über 1 und unter 1000 mPas, besonders bevorzugt unter 200 mPas aufweisen. Als Diisocyanate sind solche bevorzugt, die etwa 3 bis etwa 36, insbesondere etwa 8 bis 15 Kohlenstoffatome enthalten. Beispiele für geeignete Diisocyanate sind Hexamethylendiisocyanat, Tetramethylxylylendiisocyanat, Isophorondiisocyanat, Dicyclohexylmethandiisocyanat.

Bevorzugt werden Polyisocyanate von höherer Isocyanatfunktionalität verwendet, beispielsweise durch Di- und/oder Trimerisierung vorstehend genannter Diisocyanate hergestellte Polyisocyanate. Weitere Beispiele sind durch Umsetzung der vorstehend genannten Diisocyanate mit Wasser hergestellte Biuretgruppen enthaltende Polyisocyanate oder durch Umsetzung mit Polyolen hergestellte Urethangruppen enthaltende Polyisocyanate.

Im Falle der blockierten Polyisocyanate können beliebige für die Vernetzung geeignete organische Polyisocyanate, z.B. die vorstehend genannten, benutzt werden, bei denen die Isocyanatgruppen mit einer Verbindung umgesetzt worden sind, so daß das gebildete blockierte Polyisocyanat gegenüber Hydroxylgruppen und Wasser bei Raumtemperatur beständig ist, bei erhöhten Temperaturen, in der Regel im Bereich von etwa 90 bis etwa 250°C, aber reagiert.

Die blockierten Polyisocyanate, die als Vernetzer eingesetzt werden können, können mit üblichen flüchtigen einwertigen Blockierungsmitteln blockiert sein, wie sie z.B. in der Lackchemie eingesetzt werden. Beispiele hierfür sind verschiedene Alkohole, Oxime, Phenole, Amine, beta-Ketoverbindungen, Phthalimid usw. Die Polyisocyanate können innerhalb eines Moleküls mit gleichen oder verschiedenen Blockierungsmitteln blockiert sein. Als Vernetzer können auch Gemische unterschiedlich blockierter Polyisocyanate verwendet werden, sowie auch Polyisocyanate, die intramolekular unterschiedlich blockiert sind.

Weiterhin können die erfindungsgemäßen Überzugsmittel dem Fachmann bekannte auf dem Lacksektor übliche Polymermikroteilchen enthalten. Es können vernetzte oder unvernetzte Mikroteilchen eingesetzt werden. Beispiele für solche Polymermikroteilchen sind in der EP-A-0 038 127 und EP-A-0 234 362 beschrieben.

Weiterhin können die Überzugsmittel lacktechnische Additive enthalten, beispielsweise rheologiebeeinflussende Mittel, wie hochdisperse Kieselsäure, anorganische Schichtsilikate oder polymere Harnstoffverbindungen. Als Verdicker in den wäßrigen erfindungsgemäßen Überzugsmitteln wirken auch beispielsweise wasserlösliche Celluloseether wie Hydroxyethylcellulose, Methylcellulose oder Carboxymethylcellulose, sowie synthetische Polymere mit ionischen und/oder assoziativ wirkenden Gruppen wie Polyvinylalkohol, Poly(meth)acrylamid, Poly(meth)acrylsäure, Polyvinylpyrrolidon, Styrol-Maleinsäureanhydrid- oder Ethylen-Maleinsäureanhydrid-Copolymere und ihre Derivate oder auch hydrophob modifizierte ethoxylierte Polyurethane oder Polyacrylate. Es können beispielsweise auch Antiabsetzmittel, Verlaufsmittel, Lichtschutzmittel (beispielsweise vom HALS-Typ, vom Benztriazol-Typ, Mikrotitandioxid), Antischaummittel, wie beispielsweise silikonhaltige Verbindungen, Netzmittel sowie haftvermittelnde Substanzen eingesetzt werden. Zur Beschleunigung der Härtung können gegebenenfalls Katalysatoren eingesetzt werden.

In den wäßrigen erfindungsgemäßen Überzugsmitteln können auch geringe Mengen von Lösemitteln vorhanden sein, beispielsweise übliche lacktechnische Lösungsmittel. Diese können aus der Herstellung der Bindemittel stammen oder werden separat zugegeben. Beispiele für solche Lösungsmittel sind ein- oder mehrwertige Alkohole, z.B. Propanol, Butanol, Hexanol; Glykolether oder -ester, z.B. Diethylenglykoldialkylether, Dipropylenglykoldialkylether, jeweils mit C₁- bis C₆-Alkyl, Ethoxypropanol, Butylglykol; Glykole, z.B. Ethylenglykol, Propylenglykol und deren Oligomere, N-Methylpyrrolidon sowie Ketone wie Methylethylketon, Aceton, Cyclohexanon; aromatische oder aliphatische Kohlenwasserstoffe, z.B. Toluol, Xylol oder lineare oder verzweigte, aliphatische C₆- bis C₁₂-Kohlenwasserstoffe.

In den erfindungsgemäßen nicht-wäßrigen Überzugsmitteln sind lackübliche organische Lösemittel enthalten, wie z.B. Aromaten, z.B. Toluol, Xylole, Ethylbenzol, Solvesso 100^{R} (Gemisch aromatischer Kohlenwasserstoffe mit einem Siedebereich von 153 bis 180°C); Ester, z.B. Ethylacetat, Butylacetat, Amylacetat; Glykoletherester, z.B. Ethoxypropylacetat, Ethylglykolacetat, Methoxypropylacetat; Glykolether, z.B. Ethylenglykoldimethylether; Ketone, z.B. Methylethylketon, Diisobutylketon, Cyclohexanon, Isophoron; Alkohole, z.B. Propanol, Hexanol, Isobutanol.

Über die Auswahl der Lösungsmittel kann der Verlauf sowie die Viskosität des Überzugsmittels beeinflußt werden. Über den Siedepunkt der eingesetzten Lösungsmittelmischung kann das Abdunstverhalten beeinflußt werden.

Das erfindungsgemäße Überzugsmittel enthält mindestens ein LCP-Pigment, mindestens ein weiteres plättchenförmiges Effektpigment und gegebenenfalls ein oder mehrere anorganische und/oder organische farbgebende Absorptionspigmente, gegebenenfalls einen oder mehrere Füllstoffe sowie gegebenenfalls einen oder mehrere lösliche organische Farbstoffe. Die Absorptionspigmente und Farbstoffe sind bevorzugt dunkler Natur, da der erfindungsgemäß angestrebte besondere Farbeffekt dann besonders verstärkt wird. Die Absorptionspigmente und Farbstoffe können bezüglich ihres Farbtons der wirksamen Interferenzfarbe des LCP-Pigments angepaßt sein oder sich davon unterscheiden. Bevorzugt enthält das erfindungsgemäße Überzugsmittel nur ein LCP-Pigment und nur ein weiteres plättchenförmiges Effektpigment. Es können aber auch Mischungen von LCP-Pigmenten unterschiedlicher wirksamer Interferenzfarben und Mischungen von weiteren Effektpigmenten eingesetzt werden. Es sind bevorzugt keine zusätzlichen Farbstoffe oder Absorptionspigmente enthalten. Über die Mischung mehrerer LCP-Pigmente unterschiedlicher wirksamer Interferenzfarben sind der Einstellung aller denkbaren Farbschattierungen keine Grenzen gesetzt.

Beispiele für farbgebende Absorptionspigmente und/oder Füllstoffe, die organischer oder anorganischer Natur sein können, sind Titandioxid, Eisenoxidpigmente, Ruß, Siliziumdioxid, Bariumsulfat, Talkum, Azopigmente, Phthalocyaninpigmente, Chinacridon- oder Pyrrolopyrrolpigmente.

Im Falle nicht-wäßriger erfindungsgemäßer Überzugsmittel werden die LCP-Pigmente in das in organischer Phase vorliegende Bindemittel direkt eingerührt. Die weiteren Effektpigmente werden beispielsweise wie folgt in das Überzugsmittel eingearbeitet; Interferenzpigmente werden analog den LCP-Pigmenten eingearbeitet, während z.B. in Form einer handelsüblichen Paste vorliegende Metallplättchenpigmente zunächst in einem geeigneten Lösemittel, beispielsweise in einem der vorstehend genannten Lösemittel, aufgeschlämmt werden, bevor sie dem in organischer Phase vorliegenden Bindemittel zugegeben werden.

Die farbgebenden Absorptionspigmente und/oder Füllstoffe werden im allgemeinen in einem Teil der Bindemittel angerieben oder es kann in einem speziellen Pastenharz angerieben werden. Das Anreiben geschieht in üblichen dem Fachmann bekannten Aggregaten. Danach wird mit dem restlichen Anteil des Bindemittels oder des Pastenharzes zur fertigen Farbpigmentanreibung komplettiert.

Im Falle wäßriger Überzugsmittel werden die pulverförmigen LCP-Pigmente zunächst mit bevorzugt wasserverdünnbaren organischen Lösemitteln und Additiven zu einer Paste verarbeitet. Es kann zweckmäßig sein bei der Herstellung der Paste die vorstehend beschriebenen wasserverdünnbaren Bindemittel und/oder ein Pastenharz zuzusetzen. Die weiteren Effektpigmente werden z.B. in Form einer handelsüblichen Paste vorgelegt, mit wasserverdünnbarem organischem Lösemittel und Additiven versetzt und anschließend mit der wäßrigen Harzlösung unter Scheren vermischt. Pulverförmige Effektpigmente werden zunächst mit Lösemittel und Additiven zu einer Paste verarbeitet.

Die farbgebenden Absorptionspigmente und/oder Füllstoffe werden im allgemeinen in einem Teil der wasserverdünnbaren Bindemittel angerieben. Bevorzugt kann das Anreiben auch in einem speziellen wasserverdünnbaren Pastenharz geschehen. Ein Beispiel für ein im erfindungsgemäßen Wasserbasislack bevorzugt einsetzbares Pastenharz auf Basis eines anionisch stabilisierten Polyurethanharzes findet sich in der DE-A-40 00 889. Das Anreiben geschieht in üblichen dem Fachmann bekannten Aggregaten. Danach wird mit dem restlichen Anteil des wäßrigen Bindemittels oder des wäßrigen Pastenharzes zur fertigen Farbpigmentanreibung komplettiert.

Bei der Verarbeitung der plättchenförmigen LCP-Pigmente und der weiteren Effektpigmente ist darauf zu achten, daß diese beim Vermischen nicht mechanisch beschädigt werden.

Sind in dem Überzugsmittel Pastenharze vorhanden, so addieren sich diese zu Bindemittel plus gegebenenfalls vorhandenem Vernetzer.

Handelt es sich bei den erfindungsgemäßen Basislacken um Wasserbasislacke, die auf Basis kationisch stabilisierter Bindemittel formuliert sind, so enthalten diese Säuren als Neutralisationsmittel. Beispiele sind Ameisensäure, Essigsäure und Milchsäure.

Handelt es sich bei den erfindungsgemäßen Basislacken um Wasserbasislacke, die auf Basis anionisch stabilisierter Bindemittel formuliert sind, so enthalten diese Basen als Neutralisationsmittel. Beispiele sind Ammoniak oder organische Amine wie Triethylamin, N-Methylmorpholin, Aminoalkohole wie Dimethylisopropanolamin, Dimethylethanolamin, 2-Amino-2-methylpropanol-1.

Die erfindungsgemäßen Überzugsmittel können beispielsweise in Form eines aus Mischlacken bestehenden Mischsystems bereitgestellt werden.

Die erfindungsgemäßen Basislacke können auch in der Form sogenannter Module bereitgestellt werden, aus denen sie letztlich durch Vermischen unmittelbar vor der Anwendung bereitet werden. So können die LCP-Pigmente und die weiteren Effektpigmente beispielsweise Bestandteil eines Effektmoduls sein. Weiterhin können beispielsweise die Bindemittel Bestandteil eines Bindemittelmoduls und gegebenenfalls eines separat davon bereitgestellten Effektmoduls und/oder Farbmoduls sein. Die Vernetzer können beispielsweise Bestandteil eines Vernetzermoduls sein. Weitere Bestandteile können in Form weiterer getrennter Module vorliegen.

Ein Beispiel für ein wäßriges, derartiges Modulsystem ist in der EP-A- 0 608 773 der gleichen Anmelderin beschrieben.

Das erfindungsgemäße Überzugsmittel, beispielsweise ein erfindungsgemäßer Basislack, besitzt beispielsweise einen Festkörpergehalt von 10 bis 50 Gew.-%, bevorzugt von 15 bis 30 Gew.-%. Das Verhältnis von Pigment zu Bindemittel im erfindungsgemäßen Überzugsmittel beträgt bevorzugt 0,03 : 1 bis 1 : 1, besonders bevorzugt 0,06 : 1 bis 0,6 : 1, jeweils bezogen auf das Festkörpergewicht. Das Verhältnis von LCP-Pigment plus weiteres Effektpigment zu Bindemittel im erfindungsgemäßen Überzugsmittel beträgt bevorzugt 0,03 : 1 bis 0,5 : 1, besonders bevorzugt 0,06 : 1 bis 0,25 : 1. Das Volumenverhältnis von LCP-Pigment zu weiterem Effektpigment beträgt bevorzugt zwischen 1 : 10 und 10 : 1. Bei den vorstehend die Gewichtsverhältnisse betreffenden Angaben bedeutet der Ausdruck "Bindemittel" das Bindemittel als solches plus gegebenenfalls vorhandenem Vernetzer plus gegebenenfalls vorhandenem Pastenharz.

Die erfindungsgemäßen Überzugsmittel können nach üblichen Methoden appliziert werden. Bevorzugt werden sie durch Spritzen in einer Trockenschichtdicke von beispielsweise 15 bis 40 µm appliziert. Bei der Anwendung als Basislacke zur Herstellung von Mehrschichtlackierungen erfolgt die Applikation bevorzugt im Naß-in-Naß-Verfahren, d.h. nach einer Ablüftphase, z.B. bei 20 bis 80°C, können die Basislackschichten mit einem üblichen Klarlack in einer Trockenschichtdicke von bevorzugt 30 bis 80 µm überlackiert und gemeinsam mit diesem bei Temperaturen von beispielsweise 20 bis 140°C getrocknet oder vernetzt werden. Die Trocknungsbedingungen der Decklackschicht (Basislack und Klarlack) richten sich nach dem verwendeten Klarlacksystem. Sie können beispielsweise bei 20 bis 150°C liegen. Für Reparaturzwecke sind beispielsweise Temperaturen von 20 bis 80°C bevorzugt. Für Zwecke der Serienlackierung sind im allgemeinen Temperaturen über 80°C, beispielsweise über 100°C bevorzugt. Als Klarlack sind grundsätzlich alle bekannten Klarlacke oder transparent pigmentierten Überzugsmittel geeignet. Hierbei können sowohl lösungsmittelhaltige Ein- oder Zweikomponentenlacke, wasserverdünnbare Klarlacke oder Pulverklarlacke eingesetzt werden. Es kann zweckmäßig sein, die Klarlackschichtdicke im Bereich über 50 µm zu wählen, beispielsweise durch Auftrag zweier Klarlackschichten aus gleichen oder verschiedenen Flüssigklarlacken oder einer entsprechenden Pulverklarlackschicht. Diese Mehrschichtlackierungen können auf verschiedenste Arten von Substraten aufgebracht werden. Im allgemeinen handelt es sich um metallische oder Kunststoffuntergründe. Diese sind häufig vorbeschichtet, d.h. Kunststoffsubstrate können z.B. mit einer Kunststoffgrundierung versehen sein, metallische Substrate besitzen im allgemeinen eine elektrophoretisch aufgebrachte Grundierung und gegebenenfalls zusätzlich eine oder mehrere weitere Lackschichten, wie z.B. eine Füllerschicht. Diese Schichten sind im allgemeinen ausgehärtet.

Bevorzugt handelt es sich bei den mit dem erfindungsgemäßen Überzugsmittel überzulackierenden Untergründen um dunkle Untergründe. Unter Untergrund ist in diesem Zusammenhang nicht nur ein an seiner Oberfläche mit einer dunklen Lackschicht versehenes Substrat zu verstehen, sondern auch ein in sich dunkel pigmentiertes Substrat, beispielsweise Kunststoffsubstrat. Beispiele für dunkle Lackschichten sind Grundierungen, z.B. elektrophoretisch oder durch Spritzlackierung aufgebrachte Grundierungen, Kunststoffgrundierungen, Füller- oder Steinschlagschutzschichten, aber auch unifarbene Basis- oder Decklackschichten. Die dunklen Substrate oder dunklen Lackschichten sind mit dunklen Absorptionspigmenten pigmentiert, wobei Effektpigmente ausdrücklich ausgeschlossen sind. Beispiele für dunkle Untergründe sind dunkelblau, dunkelrot, dunkelgrün oder bevorzugt dunkelgrau, besonders bevorzugt jedoch ist schwarz. In diesen Fällen tritt der mit dem erfindungsgemäßen Überzugsmittel zu erzielende Effekt in besonderem Maße hervor. Die erfindungsgemäßen Überzugsmittel können natürlich auch auf hellere Untergründe appliziert werden, jedoch wird der erfindungsgemäß angestrebte besondere Farbeffekt dann nur abgeschwächt wirksam.

Das erfindungsgemäße Überzugsmittel erlaubt die Herstellung farbbrillanter Mehrschichtlackierungen mit überraschend stark ausgeprägtem Farbflop, der überlagert wird durch die üblichen coloristischen Eigenschaften der zusätzlich zu den LCP-Pigmenten im Überzugsmittel enthaltenen weiteren Effektgeber. Der Farbeindruck der fertig lackierten Substrate wechselt in Abhängigkeit vom Einfallswinkel des Lichtes und zusätzlich vom Betrachtungswinkel, ist jedoch unabhängig von äußeren Temperatureinflüssen.

Die mit den erfindungsgemäßen Überzugsmitteln erhaltenen Mehrschichtlackierungen entsprechen den heute üblichen Anforderungen in der Kraftfahrzeuglackierung. Die erfindungsgemäßen Überzugsmittel sind somit geeignet für die Fahrzeugerstlackierung und -reparaturlackierung, insbesondere als Basislack, sie können jedoch auch in anderen Bereichen, z.B. der Kunststofflackierung, insbesondere der Fahrzeugteilelackierung, eingesetzt werden.

### Beispiel 1:

### Polyorganosiloxane mit methacryloylfunktionellen Seitenketten

Eine Lösung aus 233 g 4-(Prop-2-en-1-oxy)benzoesäurecholesterinester (erhältlich gemäß DE-A-3 110 048), 178 g 4-(Prop-2-en-1-oxy)benzoesäure(4-trimethylsiloxyphenyl)ester (erhältlich gemäß EP-A-0 358 208, Seite 9, Abschnitt C) und 56,9 g Tetramethylcyclotetrasiloxan in 400 ml Toluol wurde in Gegenwart von 24 mg Dicyclopentadienplatindichlorid 1 Stunde und nach Zusatz einer Lösung von 1,2 g NaOH in 50 ml Ethanol weitere 7 Stunden unter Rückfluß gekocht, um den Silylether zu spalten. Die Reaktionsmischung wurde auf 1/3 ihres Volumens im Rotationsverdampfer eingeengt, mit 7,5 g p-Toluolsulfonsäure und 154 g Methacrylsäureanhydrid versetzt und 1 Stunde auf 100°C erwärmt. Nach dem Abdestillieren der flüchtigen Bestandteile wurde zweimal mit Methylenchlorid/Ethanol umgefällt.

Das Produkt hatte folgende physikalische und thermodynamische Daten: Glaspunkt: 14°C, Klärpunkt: 141°C.

### Beispiel 2:

### Darstellung eines polymerisierbaren Monomeren

### Methacryloxybenzoesäure(4-ethylphenyl)ester

Eine Lösung von 16,9 g 4-Trimethylsilyloxybenzoesäure(4-ethyl)phenyl-ester (hergestellt analog der Vorschrift in EP-A-O 358 208, Seite 9, Abschnitt C) in 15 ml Toluol und 10 ml Ethanol wurde eine Stunde unter Rückfluß gekocht und anschließend durch Erhitzen auf 100°C für 60 Minuten von flüchtigen Bestandteilen befreit. Die verbliebenen 13,3 g 4-Hydroxybenzoesäure(4-ethyl)phenylester wurden zusammen mit 30 g Methacrylsäureanhydrid und 1,2 g Toluolsulfonsäure in 15 ml Toluol gelöst und 1 Stunde auf 100°C erwärmt. Nach dem Abkühlen wurde das Produkt mit Hexan ausgefällt und aus Ethanol umkristallisiert.

### Beispiel 3:

### Herstellung einer roten Flüssigkristallmischung

6 g des Polyorganosiloxans, hergestellt wie in Beispiel 1, wurden in 50 ml Toluol gelöst. Dieser Lösung wurden 1,5 g Methacryloxybenzoesäure(4-ethyl-phenyl)ester (hergestellt wie in Beispiel 2) und 7,5 mg Aluminiumkupferon (erhältlich unter der Bezeichnung Q 1301 bei Wako Chemicals GmbH, Neuss) zugegeben. Das Toluol wurde dann unter Vakuum bei 70°C im Rotationsverdampfer entfernt.

Es entsteht eine zähflüssige LC-Masse mit folgenden physikalischen und thermodynamischen Daten:
Glaspunkt: -2°C, Klärpunkt: 124°C.

### Beispiel 4:

### Herstellung einer blauen Flüssigkristallmischung

Wie in Beispiel 1 beschrieben, wurden 6 g des Polyorganosiloxans hergestellt. Dieses wurde in 50 ml Toluol gelöst. Dieser Lösung wurden 2,6 g Methacrylsäurecholesterinester (hergestellt wie in De Visser et al., J. Polym. Sci., A 1 (9), 1893 (1971) beschrieben) und 9 mg Aluminiumkupferon (erhältlich unter der Bezeichnung Q 1301 von Wako Chemicals GmbH, Neuss) zugegeben. Das Toluol wurde dann unter Vakuum bei 70°C im Rotationsverdampfer entfernt.

Es entstand eine zähflüssige LC-Masse mit folgenden physikalischen und thermodynamischen Daten:
Glaspunkt: 4°C, Klärpunkt: 132°C.

### Beispiel 5:

### A) Herstellung einer grünen Flüssigkristallmischung

2,8 g der roten Farbmischung (hergestellt wie in Beispiel 3 beschrieben), 1,2 g der blauen Farbmischung (hergestellt wie in Beispiel 4 beschrieben) und 0,11 g 2-Methyl-1-[4-(methylthio)phenyl]-2-morpholino-1-propanon (erhältlich unter der Bezeichnung Irgacure 907 bei Ciba Marienberg GmbH, Bensheim) wurden unter Umrühren homogen vermischt.

Man erhält eine grünlich schimmernde, zähflüssige LC-Masse mit folgenden thermodynamischen Daten:
Glaspunkt: 2°C, Klärpunkt: 128°C.

### B) Darstellung eines LCP-Pigments

4 g der LC-Masse, hergestellt wie vorstehend unter A) beschrieben, wurden auf 70°C erwärmt und mit 0,11 g 2-Methyl-1-[4-methyl-thio)phenyl]-2-morpholino-1-propanon (erhältlich unter der Bezeichnung Irgacure 907 bei Ciba Marienberg GmbH, Bensheim) unter Umrühren homogen vermischt. Das flüssigkristalline Material wurde bei 80°C mit Hilfe einer Rakel auf eine Polyethylenterephthalatfolie (Hoechst AG, Geschäftsbereich Folien, Wiesbaden) in Schichtdicken von 7 Mikrometern aufgetragen, wobei die Folie unter der fixierten Rakel mit einer Laufgeschwindigkeit von etwa 2 Meter pro Minute fortbewegt wurde. Gleichzeitig erfolgt aufgrund des Schergefälles zwischen Rakel und Folie die Orientierung der flüssigkristallinen Moleküle. Anschließend wurde diese Schicht mit Hilfe einer Quecksilberentladungslampe (80 Watt/cm) 5 Sekunden bestrahlt und so dreidimensional vernetzt. Der auf der Folie entstandene Film war im heißen und kalten Zustand klebfrei und spröde. Es hatte eine Reflektionswellenlänge von 530 Nanometer (Einfallswinkel und Beobachtungswinkel 45°). Die mechanische Abtrennung des auf diese Weise erhaltenen flüssigkristallinen Materials von der Unterlage wurde dadurch erreicht, daß die Folie über eine Umlenkrolle mit 10 cm Durchmesser geführt wurde und so das vernetzte Material vom Träger abblättert. Das Mahlen des vernetzten, substratfreien Materials wurde in einer Universalmühle durchgeführt. Durch fünfminütiges Mahlen der überwiegend in Blättchenform (Größe: einige Millimeter bis Zentimeter) anfallenden vernetzten Polyorganosiloxane entstand eine pulverförmige Fraktion. Das Mahlgut wurde dann zur Verengung der Korngrößenverteilung einem Siebprozeß unterworfen.

### Beispiel 6:

### Herstellung eines Bindemittelmoduls

Nachfolgend genannte Bestandteile werden unter Rühren gut miteinander vermischt:

| | |
|---|---|
| 26,2 Teile | einer PU-Dispersion gemäß DE-A-4 224 617, Herstellungsbeispiel 3, |
| 8,8 Teile | Hexamethoxymethylmelamin, |
| 5 Teile | n-Butanol, |
| 3,5 Teile | eines handelsüblichen Verdickers auf Polyacrylsäurebasis, |
| 0,25 Teile | N,N-Dimethylethanolamin, |
| 56,25 Teile | deionisiertes Wasser. |

### Beispiel 7:

### Herstellung eines Effektmoduls

Folgende Bestandteile sind im Effektmodul enthalten:

| | |
|---|---|
| 35 Teile | der PU-Dispersion aus Beispiel 6, |
| 9 Teile | des LCP-Pigmentes gemäß Beispiel 5 B (Korngrößenfraktion: 1 - 100 µm), |
| 5 Teile | einer handelsüblichen für Wasserbasislack geeigneten Aluminiumpaste mit 60 % Aluminium, |
| 25 Teile | Butylglykol, |
| 1,8 Teile | des Verdickers aus Beispiel 6, |
| 0,2 Teile | N,N-Dimethylethanolamin. |

Die LCP-Pigmente und die Aluminiumpaste werden jeweils mit Lösemittel und Additiven angepastet. Anschließend wird zur Mischung aus beiden Pasten das Bindemittel dazugegeben und gut vermischt. Danach wird mit 22 Teilen deionisierten Wassers verdünnt.

### Beispiel 8:

### Herstellung eines wäßrigen Effektbasislackes

80 Teile des Bindemittelmoduls aus Beispiel 6 und 20 Teile des Effektmoduls aus Beispiel 7 wurden durch gleichmäßiges Vermischen zu lagerstabilen, wäßrigen Effektbasislacken formuliert.

### Beispiel 9:

### Herstellung einer Mehrschichtlackierung

Der wäßrige Effektbasislack aus Beispiel 8 wird auf übliche, phosphatierte und durch kathodische Tauchlackierung und mit einem schwarzen Füller vorbeschichtete Karosseriebleche durch Spritzen in einer Trokkenschichtdicke von 20 Mikrometer aufgebracht. Nach der Applikation wird bei Raumtemperatur 10 Minuten abgelüftet und anschließend 10 Minuten bei 80°C vorgetrocknet. Anschließend wird ein handelsüblicher 2K-Polyurethanklarlack auf Acrylatharzbasis in einer Trockenschichtdicke von 50 Mikrometer überlackiert und 30 Minuten bei 100°C (Objekttemperatur) getrocknet.

Man erhält eine Mehrschichtlackierung mit einem Hell/Dunkel-Flop und einem stark ausgeprägten Farbflop, dessen Farbumschlag von grün nach blau liegt.

## Patentansprüche

1. Überzugsmittel, geeignet als Basislack für Mehrschichtlackierungen, enthaltend:
- ein oder mehrere lackübliche Bindemittel,
- ein oder mehrere plättchenförmige Pigmente mit vom Betrachtungswinkel abhängiger Farbigkeit, die aus orientierten, dreidimensional vernetzten Substanzen flüssigkristalliner Struktur mit chiraler Phase bestehen,
- ein oder mehrere davon unterschiedliche übliche Effektpigmente,
- gegebenenfalls ein oder mehrere Vernetzer,
- gegebenenfalls ein oder mehrere farbige Absorptionspigmente und/oder Füllstoffe, sowie
- gegebenenfalls lackübliche Additive.

2. Überzugsmittel nach Anspruch 1, dadurch gekennzeichnet, daß sie ein oder mehrere organische Lösemittel enthalten.

3. Überzugsmittel nach Anspruch 1 oder 2, dadurch gekennzeichnet, daß sie Wasser enthalten.

4. Überzugsmittel nach Anspruch 1 oder 2, dadurch gekennzeichnet, daß als lacküblichen Bindemittel Polyester, Alkydharze, Polyurethane, (Meth)acrylcopolymerisate und/oder Harze auf Celluloseesterbasis in organischen Lösemitteln gelöst oder dispergiert sind.

5. Überzugsmittel nach Anspruch 3, dadurch gekennzeichnet, daß die lacküblichen Bindemittel wasserverdünnbare kationisch stabilisierte Harze sind.

6. Überzugsmittel nach Anspruch 5, dadurch gekennzeichnet, daß die kationisch stabilisierten wasserverdünnbaren Bindemittel Harze auf der Basis von (Meth)acrylcopolymeren, Polyestern, Polyurethanen und/oder Polyurethan-Harnstoffen sind, mit einem Zahlenmittel der Molmasse (Mn) von 500 bis 500000, einer OH-Zahl von 0 bis 450, einer Aminzahl von 20 bis 200 und einer Glasübergangstemperatur von -50 bis +150°C.

7. Überzugsmittel nach Anspruch 3, dadurch gekennzeichnet, daß die lacküblichen Bindemittel wasserverdünnbare anionisch stabilisierte Harze sind.

8. Überzugsmittel nach Anspruch 7, dadurch gekennzeichnet, daß die wasserverdünnbaren Bindemittel (Meth)acrylcopolymerharze, Polyesterharze und/oder Polyurethanharze mit einem Gewichtsmittel der Molmasse (Mw) von 1000 bis 500000 sind.

9. Überzugsmittel nach einem der vorhergehenden Ansprüche, dadurch gekennzeichnet, daß sie einen oder mehrere Vernetzer auf der Basis von Formaldehyd-Kondensationsharzen und/oder freien oder blockierten Polyisocyanaten enthalten.

10. Überzugsmittel nach Anspruch 9, dadurch gekennzeichnet, daß das Mischungsverhältnis von Vernetzer zu Bindemittelharz 10 : 90 bis 40 : 60, jeweils bezogen auf das Festkörpergewicht, beträgt.

11. Überzugsmittel nach einem der vorhergehenden Ansprüche, dadurch gekennzeichnet, daß es einen Festkörpergehalt von 10 bis 50 Gew.-% und ein Verhältnis von Pigment zu Bindemittelharz plus gegebenenfalls vorhandenem Vernetzer plus gegebenenfalls vorhandenem Pastenharz von 0,03 : 1 bis 1 : 1, bezogen auf das Festkörpergewicht, aufweist.

12. Überzugsmittel nach einem der vorhergehenden Ansprüche, dadurch gekennzeichnet, daß das Verhältnis von plättchenförmigem Pigment auf Basis dreidimensional vernetzter Substanz mit flüssigkristalliner Struktur plus Effektpigment zum Bindemittelharz plus gegebenenfalls vorhandenem Vernetzer plus gegebenenfalls vorhandenem Pastenharz 0,03 : 1 bis 0,5 : 1, jeweils bezogen auf das Festkörpergewicht, beträgt.

13. Überzugsmittel nach einem der vorhergehenden Ansprüche, dadurch gekennzeichnet, daß das Volumenverhältnis von plättchenförmigem Pigment auf der Basis von dreidimensional vernetzter Substanz mit flüssigkristalliner Struktur zum weiteren Effektpigment 1 : 10 bis 10 : 1 beträgt.

14. Verfahren zur Mehrschichtlackierung von Substraten durch Auftrag eines Basislack/Klarlack-Systems auf ein gegebenenfalls vorbeschichtetes Substrat, dadurch gekennzeichnet, daß als Basislack ein Überzugsmittel gemäß einem der Ansprüche 1 bis 13 aufgetragen wird.

15. Verfahren nach Anspruch 14, dadurch gekennzeichnet, daß der Basislack auf ein dunkles Substrat oder auf ein mit einem dunklen Überzug überzogenes Substrat aufgebracht wird.

## Claims

1. Coating compositions suitable as basecoat for multicoat paint systems, comprising:
- one or more customary paint binders,
- one or more plateletlike pigments whose colour depends on the viewing angle, which consist of oriented, three-dimensionally crosslinked substances of liquid-crystalline structure with a chiral phase,
- one or more customary special-effect pigments which differ therefrom,
- if desired, one or more crosslinking agents,
- if desired, one or more coloured absorption pigments and/or fillers, and
- if desired, customary paint additives.

2. Coating compositions according to Claim 1, characterized in that they comprise one or more organic solvents.

3. Coating compositions according to Claim 1 or 2, characterized in that they comprise water.

4. Coating compositions according to Claim 1 or 2, characterized in that, as customary paint binders, polyesters, alkyd resins, polyurethanes, (meth)acrylic copolymers and/or resins based on cellulose esters are dissolved or dispersed in organic solvents.

5. Coating compositions according to Claim 3, characterized in that the customary paint binders are water-dilutable cationically stabilized resins.

6. Coating compositions according to Claim 5, characterized in that the cationically stabilized water-dilutable binders are resins which are based on (meth)acrylic copolymers, polyesters, polyurethanes and/or polyurethaneureas and have a number average molar mass (Mn) or from 500 to 500,000, an OH number of from 0 to 450, an amine number of from 20 to 200 and a glass transition temperature of from -50 to +150°C.

7. Coating compositions according to Claim 3, characterized in that the customary paint binders are water-dilutable anionically stablized resins.

8. Coating compositions according to Claim 7, characterized in that the water-dilutable binders are (meth)acrylic copolymer resins, polyester resins and/or polyurethane resins having a weight average molar mass (Mw) of from 1000 to 500,000.

9. Coating compositions according to any one of the preceding claims, characterized in that they comprise one or more crosslinking agents based on formaldehyde condensation resins and/or free or blocked polyisocyanates.

10. Coating compositions according to Claim 9, characterized in that the mixing ratio of crosslinking agent to binder resin is from 10:90 to 40:60, based in each case on the weight of solids.

11. Coating compositions according to any one of the preceding claims, characterized in that it has a solids content of from 10 to 50% by weight and a ratio of pigment to binder resin plus any crosslinking agent present plus any paste resin present of from 0.03:1 to 1:1, based on the weight of solids.

12. Coating compositions according to any one of the preceding claims, characterized in that the ratio of plateletlike pigment based on three-dimensionally crosslinked substance having a liquid crystalline structure plus special effect pigment to the binder resin plus any crosslinking agent present plus any paste resin present is from 0.03:1 to 0.5:1, based in each case on the weight of solids.

13. Coating compositions according to any one of the preceding claims, characterized in that the volume ratio of plateletlike pigment based on three-dimensionally crosslinked substance having a liquid crystalline structure to the further special effect pigment is from 1:10 to 10:1.

14. Process for the multicoat painting of substrates by applying a basecoat/clearcoat system to an uncoated or precoated substrate, characterized in that the basecoat applied is a coating composition according to any one of claims 1 to 13.

15. Process according to Claim 14, characterized in that the basecoat is applied to a dark substrate or to a substrate which is coated with a dark coating.

## Revendications

1. Composition de revêtement, appropriée comme laque de base pour des vernis à plusieurs couches, contenant :
- un ou plusieurs liants classiques pour vernis;
- un ou plusieurs pigments en paillettes, dont la couleur perçue dépend de l'angle d'observation, qui consistent en des substances réticulées orientées tridimensionnelles à structure de type cristal liquide avec une phase chirale;
- un ou plusieurs pigments classiques à effet spécial, qui diffèrent de ceux-ci;
- facultativement, un ou plusieurs agents de réticulation;
- facultativement, un ou plusieurs pigments colorés d'absorption et/ou charges, ainsi que
- facultativement, des additifs classiques pour les vernis.

2. Composition de revêtement suivant la revendication 1, caractérisée en ce qu'elle contient un ou plusieurs solvants organiques.

3. Composition de revêtement suivant la revendication 1 ou 2, caractérisée en ce qu'elle contient de l'eau.

4. Composition de revêtement suivant la revendication 1 ou 2, caractérisée en ce que des polyesters, résines alkyde, polyuréthannes, copolymères (méth)acryliques et/ou résines à base d'ester de cellulose sont dissous ou dispersés dans les solvants organiques, comme liants classiques des vernis.

5. Composition de revêtement suivant la revendication 3, caractérisée en ce que le liant classique pour vernis est une résine stabilisée de manière cationique, pouvant être diluée dans l'eau.

6. Composition de revêtement suivant la revendication 5, caractérisée en ce que les résines liantes stabilisées de manière cationique, pouvant être diluées dans l'eau sont à base de copolymères (méth)acryliques, de polyesters, de polyuréthannes et/ou de polyuréthannes-urées, avec une masse moléculaire moyenne en nombre (Mn) de 500 à 500 000, un indice OH de 0 à 450, un indice d'amine de 20 à 200 et une température de transition vitreuse de -50 à +150°C.

7. Composition de revêtement suivant la revendication 3, caractérisée en ce que les liants classiques pour vernis sont une résine stabilisée de manière anionique, pouvant être diluée dans l'eau.

8. Composition de revêtement suivant la revendication 7, caractérisée en ce que les résines liantes pouvant être diluées dans l'eau sont des copolymères (méth)acryliques, des résines de polyester et/ou des résines de polyuréthanne avec une masse moléculaire moyenne en poids (Mw) de 1000 à 500 000.

9. Composition de revêtement suivant l'une quelconque des revendications précédentes, caractérisée en ce qu'elle contient un ou plusieurs agents de réticulation à base de résines de condensation du formaldéhyde et/ou de polyisocyanates libres ou bloqués.

10. Composition de revêtement suivant la revendication 9, caractérisée en ce que le rapport de mélange de l'agent de réticulation à la résine liante s'élève de 10:90 à 40:60, chaque fois sur base du poids de corps solides.

11. Composition de revêtement suivant l'une quelconque des revendications précédentes, caractérisée en ce qu'elle présente une teneur en corps solides de 10 à 50% en poids et un rapport du pigment à la résine liante plus facultativement, l'agent de réticulation présent plus facultativement, la résine pâte présente de 0,03:1 à 1:1, sur base du poids de corps solides.

12. Composition de revêtement suivant l'une quelconque des revendications précédentes, caractérisée en ce que le rapport du pigment en paillettes à base de substance réticulée tridimensionnelle à structure de type cristal liquide plus le pigment à effet spécial à la résine liante plus facultativement, l'agent de réticulation présent plus facultativement, la résine pâte présente s'élève à 0,03:1 à 0,5:1, sur base du poids de corps solides.

13. Composition de revêtement suivant l'une quelconque des revendications précédentes, caractérisée en ce que le rapport volumique du pigment en paillettes à base de substance réticulée tridimensionnelle à structure de type cristal liquide à l'autre pigment à effet spécial s'élève de 1:10 à 10:1.

14. Procédé pour peindre plusieurs couches sur des substrats, par dépôt d'un système vernis de base/vernis transparent sur un substrat facultativement préalablement revêtu, caractérisé en ce que l'on applique comme vernis de base, une composition de revêtement suivant l'une quelconque des revendications 1 à 13.

15. Procédé suivant la revendication 14, caractérisé en ce que le vernis de base est appliqué sur un substrat foncé ou sur un substrat muni d'un revêtement foncé.
